# EUROPEAN PATENT APPLICATION

(11) **EP 1 132 284 A2**
(43) Date of publication of application: **12.09.2001**
(21) Application number: 01200845.4
(22) Date of filing: 06.03.2001
(51) Int. Cl.: B62J 9/00

(54) **Combination of a shopping cart and a bicycle**

(30) Priority: 07.03.2000 NL 1014576; 04.07.2000 NL 1015610
(71) Applicant: Gaastra, Andries, 2900 Schoten (BE)
(72) Inventor: Gaastra, Andries, 2900 Schoten (BE)
(74) Representative: Verhees, Godefridus Josephus Maria

(57) **Abstract**

A shopping cart 5 is coupled to the front of a bicycle 3 via coupling facilities 11 and 25. So during cycling one always has a view of the shopping cart.

The coupling facilities 11 and 25 are formed on the one hand by rail elements 13, which are fastened near the steering head 12 to the bicycle 3, and on the other hand by guide elements 21 and 23 moveable along the rail elements 13, which are fastened to the shopping cart 5. The rail elements 13 extend from a place near the steering tube 15 of the bicycle 3 slanted downward to near the front wheel 17 of the bicycle, and have two U-shaped portions 19 for receiving the guide elements 21 of the shopping cart 5 in coupled condition. So the shopping cart 5 can be easily coupled to the bicycle 3 and be lifted loose of the ground.

In coupled condition the centre of gravity of the shopping cart 5 is near the axis of rotation 7 of the front fork 9 of the bicycle 3, so that steering is not made difficult due to the presence of the shopping cart.

## Description

### BACKGROUND OF THE INVENTION:

### Field of the invention

The invention relates to a combination of a shopping cart and a bicycle which both comprise coupling facilities for coupling to each other.

### Prior art

Such a combination is known from the French patent application FR 1.534.010. The shopping cart of the known combination consists of a frame with a luggage carrier attached to it and two wheels, and can be coupled to the back of a bicycle. In coupled condition the frame can be kinked such that the wheels of the shopping cart come free of the ground. During cycling one has no view of the shopping cart and the bags on it. In order to do something in the bags on the shopping cart or to take something out of the bags on the shopping cart one must often first step off the bicycle in order to get to the shopping cart.

### Summary of the invention

An objective of the invention is to provide a combination of the type described in the preamble in which there is a better view of the shopping cart and easier access to the bags on the shopping cart than with the known combination. To this end the combination according to the invention is characterised in that in the coupled condition the shopping cart is on the front of the bicycle. By placing the shopping cart on the front of the bicycle it is easier to place something in or remove something from the bags on the shopping cart. In addition, during cycling one has a constant view of the shopping cart and the bags on it. This prevents theft from the bags or of other things on the shopping cart.

To prevent the shopping cart with the possible bags present on it from being difficult to steer, due to the presence of the shopping cart on the front of the bicycle, an embodiment of the combination according to the invention is characterised in that in the coupled condition the centre of gravity of the shopping cart is near the axis of rotation of the front fork of the bicycle.

Preferably, the coupling facilities of the bicycle are connected to the front fork and/or the steering tube of the bicycle and they are preferably present near the steering head of the bicycle.

The coupling in the known combination of the shopping cart to the bicycle calls for a few motions. A further embodiment of the combination according to the invention in which the shopping cart can be more easily coupled to the bicycle is characterised in that the coupling facilities of the bicycle comprise guide rails and the coupling facilities of the shopping cart comprise guide elements that can be moved along the guide rails. Preferably, the guide rails comprise at least two U-shaped portions to receive the guide elements of the shopping cart in coupled condition. By pulling the shopping cart with the guide elements along the guide rails until at least two of the guide elements are in the U-shaped portions, it is easy to make the coupling between the shopping cart and the bicycle.

In addition, to make it easier for the wheels of the shopping cart to come loose of the ground another embodiment is characterised in that the guide rails comprise two parallel rail elements that extend from a place near the steering tube of the bicycle slanted downward to near the front wheel of the bicycle. While the shopping cart is being pulled along the guide rails, because of the slanted upward position of the guide rails the shopping cart and its wheels are easily pulled from the ground.

To prevent things from falling from the shopping cart or out of bags on the shopping cart another embodiment is characterised in that the guide elements form at least two pairs, which are present on an imaginary line and at a distance from each other where, viewed from the side, in the upright position of the shopping cart a line through the two pairs of guide elements is virtually parallel to the guide rails. The position of the shopping cart when coupled to the bicycle is virtually the same as the position of the shopping cart during its independent use. So the chance is small that something can fall out of or from the shopping cart. During the guiding of the shopping cart the position of the shopping cart is slightly different because on the coupling the top guide elements fall into the U-shaped portions.

Preferably, the shopping cart comprises an upright rectangular frame, which has a kink on the long side, where the kink part forms a stand, as well as at least two wheels, which are fastened to the frame via arms, and a luggage carrier, which is also fastened to the frame, with one pair of guide elements being present on the frame and one pair on the luggage carrier.

The invention also relates to a bicycle and a shopping cart for use in the combination according to the invention.

### Brief description of the drawings

The invention will be elucidated more fully below on the basis of drawings in which an embodiment of the combination according to the invention is shown. In these drawings:
Figure 1 shows a combination of a bicycle and a shopping cart according to the invention in a coupled condition;
Figure 2 shows a top view of a detail of the coupling;
Figure 3 shows a longitudinal section of the shopping cart with bags;
Figure 4 shows the shopping cart with bags in a front view; and
Figure 5 shows a combination of bicycle and shopping cart just before or after the coupling.

### Detailed description of the drawings

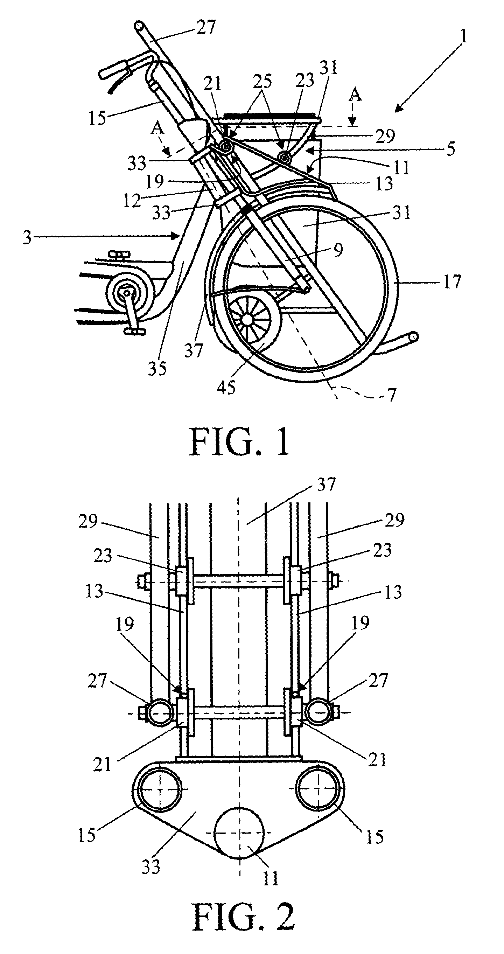

In Figure 1 a combination 1 of a bicycle 3 and a shopping cart 5 according to the invention is shown in a coupled condition. For the sake of clarity a longitudinal section of the shopping cart is shown, so that only the rear half of the shopping cart is visible. In the coupled condition the shopping cart 5 is on the front of the bicycle 3 and the centre of gravity of the shopping cart 5 is near the axis of rotation 7 of the front fork 9 of the bicycle 3. The axis of rotation 7 runs through the steering head 12 of the bicycle 3.

The bicycle 3 has coupling facilities 11, which are connected near the steering head 12 with the front fork 9 and the steering tube 15 of the bicycle 3. The coupling facilities 11 comprise guide rails, which are formed by two parallel rail elements 13. These rail elements 13 extend from the steering tube 15 of the bicycle 3 slanted downward to the front wheel 17 of the bicycle 3. The rail elements 3 are each provided with a U-shaped portion 19 for receiving, moveable along the rail elements, guide elements 21 and 23 of the shopping cart 5. The guide elements 21 and 23 are formed by guide wheels and comprise a part of the coupling facilities 25 of the shopping cart 5.

For the sake of clarity a cross section/view along line A-A shown in Figure 1 is shown in Figure 2. Here the two rail elements 13 are clearly visible. The top pair of guide elements 21 is fastened to the frame 27 of the shopping cart 5 and is in the U-shaped portions 19 of the rail elements 13. Because of this U-shape the coupling between the shopping cart 5 and the bicycle 3 cannot come loose at undesirable moments. For uncoupling the shopping cart 5 must first be pulled a distance upward and then be tilted around the bottom guide elements 23 until the top guide elements 21 come out of the U-shaped portions 19. The bottom pair of guide elements 23 is fastened to the curved bottom post 29 of the luggage carrier 31 of the shopping cart 5. The rail elements 13 are connected near the steering head 12 via a connection plate 33, which is present between the steering tubes 15 and the steering head 12, with the frame 35 of the bicycle 3, and are located above the mudguard 37 of the bicycle.

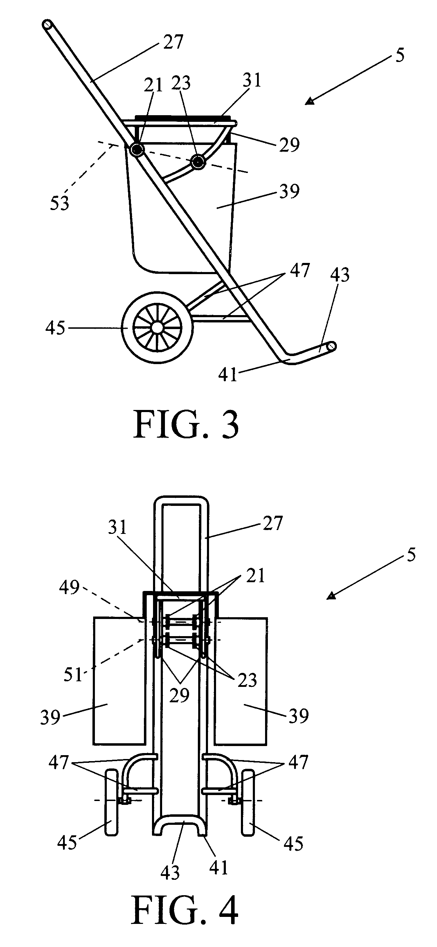

In the Figures 3 and 4 a longitudinal section respectively front view is shown of the shopping cart 5 with bags 39. The shopping cart 5 has an upright rectangular frame 27, which has a kink 41 on the long side. The kinked part 43 forms a stand. The shopping cart 5 also has two wheels 45, which are fastened to the frame 27 via arms 47, and a luggage carrier 31, which is also fastened to the frame 27.

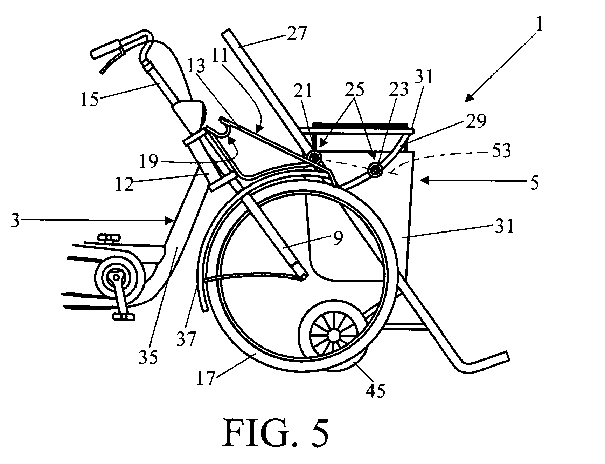

The guide elements 21 and 23 form two pairs of guide wheels. One pair 21 is present on the frame 27 and one pair 23 is present on the bottom post 29 of the luggage carrier 31. Each pair is present on an imaginary line 49, 51, with in the upright position of the shopping cart 5 there is a line 53 through both pairs 21 and 23 that is virtually parallel to the rail elements 13. This can be clearly seen in Figure 5, which shows the combination 1 of bicycle 3 and shopping cart 5 in uncoupled condition. In coupled condition the shopping cart 5 takes the same position as in the standing position (see Figure 1). Because of these mutual positions of the guide elements 21 and 23 the shopping cart 5 retains virtually the same position during coupling as in the upright position.

Although in the foregoing the invention is explained on the basis of the drawings, it must be stated that the invention is in no way limited to the embodiment shown in the drawings. The invention also extends to all embodiments differing from the embodiment shown in the drawings within the context defined by the claims.

## Claims

1. Combination of a shopping cart and a bicycle which both comprise coupling facilities for coupling to each other, **characterised in that** in coupled condition the shopping cart is on the front of the bicycle.

2. Combination according to claim 1, **characterised in that** in the coupled condition the centre of gravity of the shopping cart is near the axis of rotation of the front fork of the bicycle.

3. Combination according to claim 1 or 2, **characterised in that** the coupling facilities of the bicycle are connected to the front fork and/or the steering tube of the bicycle.

4. Combination according to claim 1, 2 or 3, **characterised in that** the coupling facilities of the bicycle are near or at the steering head of the bicycle.

5. Combination according to one of the preceding claims, **characterised in that** the coupling facilities of the bicycle comprise guide rails and the coupling facilities of the shopping cart comprise guide elements that can be moved along the guide rails.

6. Combination according to claim 5, **characterised in that** the guide rails at least comprise two U-shaped portions to receive the guide elements of the shopping cart in coupled condition.

7. Combination according to claim 5 or 6, **characterised in that** the guide rails comprise two parallel rail elements that extend from a place near the steering tube of the bicycle slanted downward to near the front wheel of the bicycle.

8. Combination according to claim 5, 6, or 7, **characterised in that** the guide elements form at least two pairs, which are present on an imaginary line and at a distance from each other where, viewed from the side, in the upright position of the shopping cart a line through the two pairs of guide elements is virtually parallel to the guide rails.

9. Combination according to claim 8, **characterised in that** the shopping cart comprises an upright rectangular frame, which has a kink on the long side, with the kinked part forming a stand, as well as at least two wheels, which are fastened to the frame via arms, and a luggage carrier, which is also fastened to the frame, with one pair of guide elements being present on the frame and one pair on the luggage carrier.

10. Bicycle for use in the combination according to one of the preceding claims 1 through 7.

11. Shopping cart for use in the combination according to one of the preceding claims 1, 2, 5, 8, and 9.
